# EUROPÄISCHE PATENTSCHRIFT

(11) **EP 3 237 748 B1**
(45) Veröffentlichungstag und Bekanntmachung des Hinweises auf die Patenterteilung: **06.05.2020**
(21) Anmeldenummer: 15820519.5
(22) Anmeldetag: 22.12.2015
(51) Int. Cl.: F02M 63/02, F02M 63/00, F02M 61/18, G05D 16/20

(54) **DRUCKREGLER FÜR EINE HOCHDRUCKRAMPE EINES SYSTEMS ZUM EINSPRITZEN VON KRAFTSTOFF**
PRESSURE REGULATOR FOR A HIGH-PRESSURE RAMP OF A FUEL INJECTION SYSTEM
RÉGULATEUR DE PRESSION POUR RAMPE HAUTE PRESSION D'UN SYSTÈME D'INJECTION DE COMBUSTIBLE

(30) Priorität: 23.12.2014 FR 1463194
(43) Veröffentlichungstag der Anmeldung: 01.11.2017
(73) Patentinhaber: Robert Bosch GmbH, 70442 Stuttgart (DE)
(72) Erfinder: BRUYERE, Lionel, 69007 Lyon (FR)
(86) Internationale Anmeldenummer: PCT/EP2015/080916
(87) Internationale Veröffentlichungsnummer: WO 2016/102532

(56) Entgegenhaltungen:
- EP-A1- 0 508 575
- EP-A2- 2 333 303
- JP-A- 2004 011 448
- JP-A- 2007 040 106
- US-A1- 2010 282 212

## Beschreibung

### GEBIET DER ERFINDUNG

Die vorliegende Erfindung betrifft einen Druckregler für eine Hochdruckrampe eines Systems zum Einspritzen von Kraftstoff in eine Brennkraftmaschine, der einen Magnetventilkörper umfasst, der den Elektromagnet, der die Nadel steuert, die den Ventilsitz verschließt, der mit dem Hochdruckeingang verbunden ist und in eine Entladungskammer mündet, die mit dem Flüssigkeitsrücklaufkreislauf durch Ausgangsöffnungen kommuniziert, wobei der Magnetventilkörper auf der Rückseite die Spule aufnimmt, die das Öffnen des Läufers steuert, der fest mit der Nadel verbunden ist und einer Schließrückstellfeder unterworfen ist, wobei die Vorderseite des Magnetventilkörpers in der Achse der Nadel die Entladungskammer hat, die sich durch einen Hohlraum fortsetzt, der einen Eingangsventilkörper aufnimmt, der axial von der Bohrung, die in den Ventilsitz mündet, durchquert wird, wobei dieser Ventilkörper in den Hohlraum gefalzt ist, wobei die Entladungskammer, die axial von der Nadel durchquert wird und die Auslassöffnungen, die mit dem Flüssigkeitsrücklaufkreislauf verbunden sind, quer in die Wand in der Entladungskammer unterhalb ihres oberen Teils münden.

### STAND DER TECHNIK

Es existiert bereits ein Druckregler des oben definierten Typs. Dieser bekannte Regler weist den Nachteil auf, dass er es nicht erlaubt, die Durchfluss-/Druckkurve zu optimieren, die theoretisch linear ist, in der Praxis jedoch einer plötzlichen Zunahme des Gefälles aufgrund des statischen Drucks des oberen Teils der Entladungskammer unterliegt.

JP2007040106 A, JP2004011448 A und US2010282212 A1 offenbaren Druckregler für eine Hochdruckrampe.

### ZIELSETZUNG DER ERFINDUNG

Die vorliegende Erfindung hat die Zielsetzung, einen Druckregler für eine Hochdruckrampe eines Kraftstoffeinspritzsystems zu entwickeln, der es erlaubt, die Durchfluss-/Druckkurve für einen effizienteren Betrieb der Regulierung und den Flüssigkeitsrücklauf zu optimieren.

### DARSTELLUNG UND VORTEILE DER ERFINDUNG

Dazu hat die Erfindung einen Druckregler des oben definierten Typs zur Aufgabe, dadurch gekennzeichnet, dass oberhalb der Oberfläche des Ventilkörpers, die den Grund der Entladungskammer bildet und in ihrer Mitte den Ventilsitz hat, der Druckregler eine ringförmige Erweiterung der Entladungskammer unter den Ausgangsöffnungen in der Verlängerung der kegelförmigen Oberfläche, die den Ventilsitz ausbildet und ein ringförmiges Totvolumen bildet, umfasst.

Der erfindungsgemäße Druckregler hat den Vorteil, dass das Totvolumen, das in dem Teil der Entladungskammer um den Ventilsitz entwickelt ist, direkt am Ausgang der Flüssigkeit liegt und es daher erlaubt, die kinetische Energie der Flüssigkeit zu absorbieren und den statischen Druck in dem oberen Teil der Entladungskammer zu verringern, damit dieser Druck nahe dem Druck des Flüssigkeitsrücklaufkreislaufs, mit dem der Regler verbunden ist, ist.

Gemäß einem anderen vorteilhaften Merkmal ist der Ventilkörper in dem Hohlraum des Endes des Magnetventilkörpers mit Einfügung einer ringförmigen Unterlage, deren Innendurchmesser einen Rücksprung aufweist und mindestens einen Teil der Höhe des Totvolumens abgrenzt, aufgenommen.

Gemäß einem anderen vorteilhaften Merkmal ist der Ventilkörper in den Hohlraum des Magnetventils des Reglers gefalzt.

Diese Ausführung des Reglers erleichtert die Konzeption und Herstellung des Totvolumens.

### ZEICHNUNGEN

Die vorliegende Erfindung wird unten ausführlicher mit Hilfe einer Ausführungsform eines Druckreglers beschrieben, der in den anliegenden Zeichnungen dargestellt ist, in welchen:
- Figur 1 eine axiale Schnittansicht einer Ausführungsform eines Druckreglers ist,
- Figur 2A die nicht zusammengefügte Vorderseite zeigt,
- Figur 2B die zusammengefügte Vorderseite auch mit der Unterlegscheibe zeigt,
- Figur 3 eine axiale Schnittansicht eines bekannten Reglers ist.

### BESCHREIBUNG EINER AUSFÜHRUNGSFORM DER ERFINDUNG

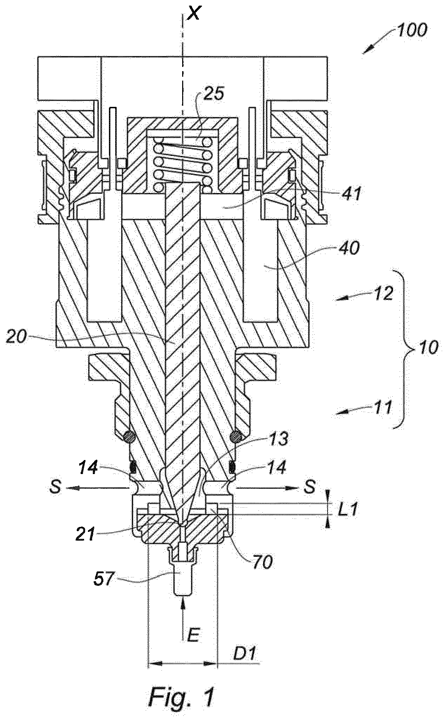

Gemäß Figur 1 hat die Erfindung ein Druckregelmagnetventil 100 zur Aufgabe, das einfach Druckregler genannt wird; es ist mit der gemeinsamen Einspritzrampe (Common Rail) eines Hochdruckeinspritzsystems einer Brennkraftmaschine verbunden.

Der Druckregler 100 besteht aus einem Magnetventilkörper 10 mit insgesamt einer Rotationsform um eine Achse XX, die sich entlang eines Kolbens in Nadelform 20 erstreckt, der mit einem Ventilsitz 30 über eine Kugel 21, die von der Nadel betätigt wird, die sie gegen den Ventilsitz 30 anlegt, zusammenwirkt.

Der Magnetventilkörper 10 ist mit einem Elektromagnet 40 ausgestattet, um auf einen Läufer 41 in Scheibenform, der fest mit der Nadel 20 verbunden ist und die Öffnungsbewegung der Nadel steuert, einzuwirken. Eine Rückstellfeder 25, die zu der Nadel 20 koaxial ist, wirkt auf den Läufer 41 und in die Schließrichtung ein.

Das vordere Ende 11 des Magnetventilkörpers 10 liegt dem hinteren Ende 12, das das ist, das mit dem Magnetventil ausgestattet ist und den Läufer 41 aufnimmt, entgegengesetzt. Das vordere Ende 11, das von der Rücklaufflüssigkeit durchquert wird, umfasst eine Entladungskammer 13, die mit Öffnungen 14 zum Austreten der Flüssigkeit zu dem Rücklaufkreislauf versehen ist, und auf der Vorderseite nimmt ein Hohlraum 15 einen Ventilkörper 50, der in den Hohlraum gefalzt ist, auf.

Die Entladungskammer 13 ist von einer zylindrischen Wand 131 um die Achse XX abgegrenzt und in die die Querbohrungen in eine Richtung im Wesentlichen senkrecht zu der Achse XX der Entladungskammer 13 durch die Öffnungen 14 münden. Diese Öffnungen 14 münden in die zylindrische Wand 131, wobei sie ein Volumen in dem oberen Teil 132 der Kammer entlang der Ausrichtung der Figuren belassen. Der Ventilkörper 50 wird von einer axialen Eingangsbohrung 51 durchquert, die mit dem Hochdruckkreislauf der gemeinsamen Rampe kommuniziert und durch eine Bohrung 52 mit verringertem Querschnitt fortsetzt, die in den Ventilsitz 30 mit insgesamt kegelstumpfförmiger Form entlang der Achse XX ausgerichtet mündet.

Die Eingangsrichtung der Flüssigkeit ist durch den Pfeil E veranschaulicht, und die Ausgangsrichtung durch die Bohrungen 14, durch die Pfeile S.

Der Ventilkörper 50 ist durch seinen zylindrischen Magnetventilkörper in dem Hohlraum 15 mit Einfügen einer ringförmigen Unterlegscheibe 60 aufgenommen, die es erlaubt, die Schließposition der Nadel 20 und ihres Läufers 41 in Bezug auf den Elektromagnet 40 einzustellen; die Unterlegscheibe 60 erlaubt es, den Luftspalt zu regeln, der verbleibt, wenn die Nadel 20 und der Läufer 40 in geschlossener Position sind, um die Herstellungs- und Fügetoleranzen der Bauteile des Reglers zu kompensieren.

Die zylindrische innere Oberfläche 61 der ringförmigen Unterlegscheibe 60, der Boden 151 des Hohlraums 15, der Rücksprung 152 grenzen ein Totvolumen 70 ab, das für seinen Querschnitt aufgezeigt ist und sich in der Verlängerung der kegelförmigen Oberfläche 31 oder quasi-kegelförmigen Oberfläche des Ventilsitzes 30 befindet. Dieses Totvolumen 70 hat einen größeren Querschnitt als die Entladungskammer 13, die über das Totvolumen 70 hinaus entlang der Achse XX liegt.

Der Rücksprung 152 in den Boden 151 des Hohlraums 15 wird zum Beispiel durch Fräsen mit gleichem Durchmesser wie der des Totvolumens 70 hergestellt.

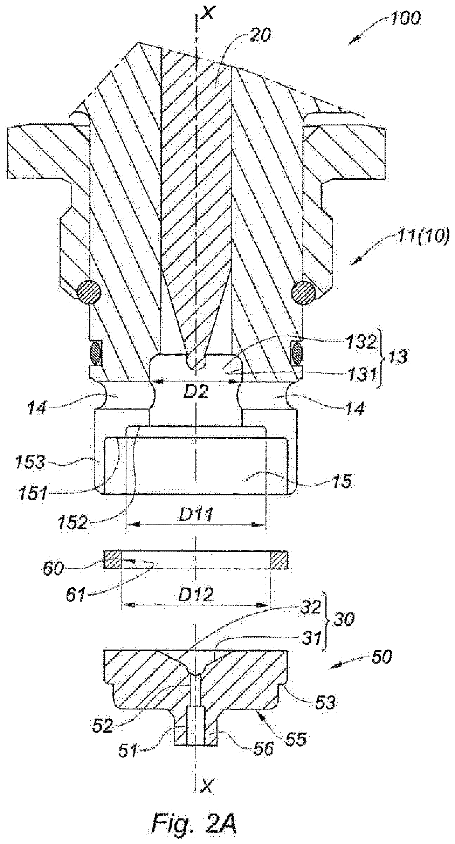

Figur 2A zeigt mit dem Ventilkörper 50, der nicht in den Hohlraum 15 eingreift, die Form der verschiedenen Elemente: die Entladungskammer 13, der Hohlraum 15 mit seinem Boden 151 und seinem Rücksprung 152, sowie die Wand 153, deren Rand umgeschlagen ist, um den Eingangsventilkörper 50 zu falzen.

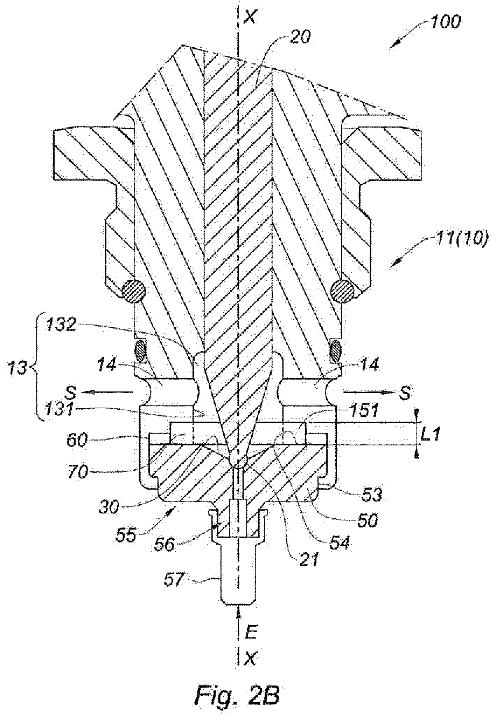

Der Ventilkörper 50 ist mit seiner axialen Eingangsbohrung 51 und seiner Bohrung mit verringertem Querschnitt 52, die die Eingangsbohrung 51 verlängert, sowie der kegelförmigen Oberfläche 31 des Ventilsitzes 30 und dem Eingang in Kalottenform 32, der die Kugel 21 aufnimmt und damit den Abdichtabsatz des Ventils 30 bildet, dargestellt. Die externe Kontur des Ventilkörpers 50 bildet einen Falzansatz 53. Die Oberseite 54 des Ventilkörpers 50 ist flach, und die Unterseite 55 umfasst eine Hülse 56, die ein Siebfilter 57 (Figur 2B) aufnimmt. Die Oberseite 55 stellt die Abdichtung mit der Hochdruckrampe sicher.

Figur 2B zeigt das Ende 11 des Magnetventilkörpers 10, der mit dem Ventilkörper 50 zusammengefügt ist, der in dem Hohlraum 15 durch Falzen mit Einfügen der Unterlegscheibe 60 zusammengefügt ist. Das Totvolumen 70 ist daher durch den Hohlraum des Magnetventilkörpers 10 des Reglers, seinen gefrästen Rücksprung 152, die ringförmige Unterlegscheibe 60 und die Innenseite 54 des Ventilkörpers 50 abgegrenzt.

Erinnerungsstriche zeigen die charakteristischen Abmessungen des Totvolumens 70 mit Ringform mit rechteckigem Querschnitt mit Durchmesser D₁ und axialer Länge L₁ entlang der Achse XX. Das Totvolumen 70 hat im Allgemeinen zwei Durchmesser D₁₁, D₁₂ und für den von D₁₁ des Rücksprungs 152 und den D₁₂, der der Innendurchmesser der ringförmigen Unterlegscheibe 60 ist.

Diese zwei Durchmesser können gleich sein, sind es aber nicht notwendigerweise. Um die Beschreibung und Präsentation der Ansprüche zu vereinfachen, wird der "Durchmesser" des Totvolumens 70 erwähnt, wobei davon ausgegangen wird, dass dieser Ausdruck die zwei Durchmesser D₁₁, D₁₂ deckt.

Dieser "Durchmesser" ist auf jeden Fall größer als der Durchmesser D₂ der Entladungskammer 13.

Die vergrößerte Figur 2B zeigt den ringförmigen Querschnitt des Totvolumens 70 auf, hervorgehoben durch einen Strich parallel zu der Achse XX und entsprechend der geometrischen Verlängerung der zylindrischen Oberfläche 131 der Wand der Entladungskammer 13. Die axiale "Höhe" L₁ entlang der Achse XX des Totvolumens 70 ist durch den Rücksprung 152 des Bodens 151 des Hohlraums und die Höhe der Unterlegscheibe 60 gebildet. Zu bemerken ist, dass diese Unterlegscheibe 60 in der Stärke nur leicht variiert (Richtung XX). Bei starker Variation der Stärke der Unterlegscheibe 60 kann man die Tiefe (axiale Richtung XX) des Rücksprung 152 des Bodens 151 des Hohlraums 15 einstellen, um ein ausreichendes Totvolumen 70 zu haben, das sich vor allem in der Verlängerung der kegelförmigen Oberfläche 31 des Sitzes 30 befindet, um sich auf dem Verlauf des kegelförmigen Flüssigkeitsstrahls, der unter der Kugel 21 der Nadel 20 durchgeht, wenn diese sich öffnet, zu befinden.

Mit anderen Worten fällt das Totvolumen 70 in den unteren Teil der Entladungskammer 13 unter die Ausgangsöffnungen 14 in der Verlängerung der kegelförmigen Oberfläche 31 des Ventilsitzes 30.

Das Totvolumen 70 ist von der Entladungskammer 13 separat und deutlich durch Ausgangsöffnungen 14 getrennt. Es liegt gegenüber dem oberen Teil 132 der Kammer 13, der den Teil des Volumens der Kammer 13 bildet, in dem ein statischer Druck herrscht.

Erfindungsgemäß hat das Totvolumen 70 die folgenden maßlichen Merkmale:
D₁₁ > D₂ D₁₂ > D₂
L₁ ≤ L₂
D₁₁ Innendurchmesser der ringförmigen Unterlegscheibe 60
D₁₂ Durchmesser des Rücksprungs 152
D₂ Durchmesser der Entladungskammer 13
L₁ axiale Länge des Totvolumens 70
L₂ axiale Entfernung zwischen der Oberseite des Ventilkörpers 50 und den Ausgangsöffnungen 14.

Verbunden mit der vergrößerten Darstellung der Figur 2B muss hervorgehoben werden, dass das Totvolumen 70 nicht gleichwertig durch eine Gesamtvergrößerung der Entladungskammer 13 hergestellt werden kann. Es ist unerlässlich, dass das Totvolumen 70 deutlich von der Entladungskammer 13 getrennt ist und sich unter der oder den Ausgangsöffnungen 14 befindet.

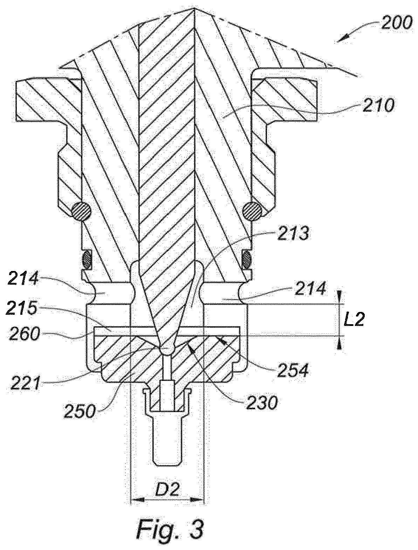

Figur 3 zeigt vergleichsweise das Ende eines bekannten Druckreglers 200, der aus einem Magnetventilkörper 210 besteht, der in einer Bohrung endet, die in den Sitz des Ventils 230 mündet. Diese wird durch den Kolben des Magnetventils in Form einer Nadel 220 verschlossen, die hier mit dem Ventilsitz 230 über eine Kugel 221 zusammenwirkt. Der Ventilkörper 250 ist an den Boden des Hohlraums 215 durch den Magnetventilkörper 210 mit Einfügen einer Unterlegscheibe 260 angelegt. Er ist in den Magnetventilkörper gefalzt. Die ringförmige Unterlegscheibe 260 hat einen Innendurchmesser D₂ gleich dem der Entladungskammer 213 und eine axiale Länge L₂ entlang der Achse XX zwischen der Oberseite 254 des Ventilkörpers 250 unter Abgrenzen der Entladungskammer 213 und Ausgangsöffnungen 214 zu dem Rücklaufkreislauf.

### STÜCKLISTE

- 10: Magnetventilkörper
- 11: Vorderes Ende
- 12: Hinteres Ende
- 13: Entladungskammer
- 131: Zylindrische Wand
- 132: Oberer Teil
- 14: Ausgangsöffnung / Bohrung
- 15: Hohlraum
- 151: Boden des Hohlraums
- 152: Rücksprung
- 153: Wand
- 20: Kolben / Nadel
- 21: Kugel
- 25: Rückstellfeder
- 30: Ventilsitz
- 31: Kegelförmige Oberfläche
- 32: Kalotte
- 40: Magnetventil / Spule
- 41: Läufer
- 50: Eingangsventilkörper
- 51: Eingangsbohrung
- 52: Bohrung mit verringertem Querschnitt
- 53: Falzansatz
- 54: Oberseite des Ventilkörpers
- 55: Untere Oberfläche
- 56: Hülse
- 57: Siebfilter
- 60: Unterlegscheibe
- 61: Innere zylindrische Oberfläche
- 70: Totvolumen
- 100: Druckregler

## Patentansprüche

1. Druckregler für eine Hochdruckrampe eines Systems zum Einspritzen von Kraftstoff in eine Brennkraftmaschine, der einen Magnetventilkörper (10) umfasst, der einen Elektromagnet (40) aufnimmt, der die Nadel (20) steuert, die den Ventilsitz (30) schließt, der mit dem Hochdruckeingang verbunden ist und in eine Entladungskammer (13) mündet, die mit dem Flüssigkeitsrücklaufkreislauf (5) durch Ausgangsöffnungen (14) kommuniziert,
- wobei der Magnetventilkörper (10) an der Rückseite (12) die Spule (40) aufnimmt, die das Öffnen des Läufers (41) steuert, der fest mit der Nadel (20) verbunden ist und einer Schließrückstellfeder (25) unterliegt,
- wobei die Vorderseite (11) des Magnetventilkörpers (10) in der Achse (XX) der Nadel (20) die Entladungskammer (13) hat, die die Nadel umgibt und sich durch einen Hohlraum (15) fortsetzt, der einen Eingangsventilkörper (50) aufnimmt, der axial von der Bohrung (51), die in den Ventilsitz (30) mündet, durchquert ist,
- wobei die Entladungskammer (13), die axial von der Nadel (20) durchquert ist, und die Ausgangsöffnungen (14), die mit dem Flüssigkeitsrücklaufkreislauf verbunden sind, quer in die Wand (131) in der Entladungskammer (13) unterhalb ihres oberen Teils (132) münden,
wobei der Regler **dadurch gekennzeichnet ist, dass**
er oberhalb der Oberfläche (54) des Ventilkörpers (50), der den Boden der Entleerungskammer (13) bildet und in seiner Mitte den Ventilsitz (30) hat, eine ringförmige Verbreiterung (70) der Entladungskammer (13) unter den Ausgangsöffnungen (14) in der Verlängerung der kegelförmigen Oberfläche (31), die den Ventilsitz (30) ausbildet und ein ringförmiges Totvolumen (70) bildet, umfasst,
wobei das Totvolumen (70) die folgenden maßlichen Merkmale hat:
sein Durchmesser D1 (D11, D12) ist größer als der Durchmesser D2 der Entladungskammer,
seine axiale Länge (L1) ist kleiner oder gleich der axialen Länge der Entladungskammer (13) zwischen der oberen Oberfläche (54) des Ventilkörpers (50) und den Öffnungen (14), die mit dem Flüssigkeitsrücklaufkreislauf kommunizieren,
sein Totvolumen (70) ist deutlich von der Entladungskammer getrennt.

2. Druckregler nach Anspruch 1,
**dadurch gekennzeichnet, dass** der Ventilkörper (50) in dem Hohlraum (15) des Endes (11) des Magnetventilkörpers (10) mit Einfügen einer ringförmigen Unterlegscheibe (60), deren Innendurchmesser (D2) im Rücksprung liegt und mindestens einen Teil der Höhe des ringförmigen Totvolumens (70) bildet, aufgenommen ist.

3. Druckregler nach Anspruch 1,
**dadurch gekennzeichnet, dass**
der Ventilkörper (50) in den Hohlraum (15) gefalzt ist.

## Claims

1. Pressure regulator for a high-pressure rail of a system for injecting fuel into an internal combustion engine, comprising a solenoid valve body (10), which accommodates a solenoid (40), which controls the needle (20) that closes the valve seat (30), which is connected to the high-pressure inlet and opens into a discharge chamber (13), which communicates through outlet apertures (14) with the liquid return circuit (5),
- wherein the rear side (12) of the solenoid valve body (10) accommodates the coil (40), which controls the opening of the rotor (41), which is fixedly connected to the needle (20) and is subject to a closing return spring (25),
- wherein the front side (11) of the solenoid valve body (10), in the axis (XX) of the needle (20), comprises the discharge chamber (13), which surrounds the needle and extends through a cavity (15) accommodating an inlet valve body (50), passing axially through which is the bore (51), which opens into the valve seat (30),
- wherein the discharge chamber (13), through which the needle (20) axially passes, and the outlet apertures (14), which are connected to the liquid return circuit, open transversally into the wall (131) in the discharge chamber (13) below the upper part (132) of the chamber, wherein the regulator is **characterized in that** above the surface (54) of the valve body (50), which forms the base of the discharge chamber (13) and has the valve seat (30) at its center, said regulator comprises an annular enlargement (70) of the discharge chamber (13) below the outlet apertures (14) in the extension of the conical surface (31) which constitutes the valve seat (30) and forms an annular dead volume (70), wherein the dead volume (70) has the following dimensional features:
its diameter D1 (D11, D12) is greater than the diameter D2 of the discharge chamber,
its axial length (L1) is smaller than or equal to the axial length of the discharge chamber (13) between the upper surface (54) of the valve body (50) and the apertures (14), which communicate with the liquid return circuit,
its dead volume (70) is distinctly separated from the discharge chamber.

2. Pressure regulator according to Claim 1, **characterized in that** the valve body (50) is accommodated in the cavity (15) at the end (11) of the solenoid valve body (10) with the insertion of an annular shim (60), the inside diameter (D2) of which is situated in the recess and forms at least a part of the height of the annular dead volume (70).

3. Pressure regulator according to Claim 1, **characterized in that** the valve body (50) is flanged into the cavity (15).

## Revendications

1. Régulateur de pression pour une rampe haute pression d'un système d'injection de carburant dans un moteur à combustion interne, qui présente un corps d'électrovanne (10) qui reçoit un électroaimant (40) qui commande l'aiguille (20) qui ferme le siège de soupape (30) qui est connecté à l'entrée haute pression et débouche dans une chambre de décharge (13) qui communique avec le circuit de retour de liquide (5) par des ouvertures de sortie (14),
- le corps d'électrovanne (10), au niveau du côté arrière (12), recevant la bobine (40) qui commande l'ouverture du rotor (41) qui est connecté fixement à l'aiguille (20) et qui est situé en dessous d'un ressort de rappel de fermeture (25),
- le côté avant (11) du corps d'électrovanne (10) présentant la chambre de décharge (13) dans l'axe (XX) de l'aiguille (20), laquelle entoure l'aiguille et se prolonge par une cavité (15) qui reçoit un corps de soupape d'entrée (50) qui est traversé axialement par l'alésage (51) qui débouche dans le siège de soupape (30),
- la chambre de décharge' (13) qui est traversée axialement par l'aiguille (20) et les ouvertures de sortie (14) qui sont connectées au circuit de retour de liquide débouchant transversalement dans la paroi (131) dans la chambre de décharge (13) en dessous de sa partie supérieure (132),
le régulateur étant **caractérisé en ce qu'**il comprend, au-dessus de la surface (54) du corps de soupape (50) qui forme le fond de la chambre de vidange (13) et présente en son centre le siège de soupape (30), un élargissement de forme annulaire (70) de la chambre de décharge (13) sous les ouvertures de sortie (14) dans le prolongement de la surface conique (31) qui constitue le siège de soupape (30) et forme un volume mort annulaire (70),
le volume mort (70) présentant les caractéristiques dimensionnelles suivantes :
son diamètre D1 (D11, D12) est supérieur au diamètre D2 de la chambre de décharge,
sa longueur axiale (L1) est inférieure ou égale à la longueur axiale de la chambre de décharge (13) entre la surface supérieure (54) du corps de soupape (50) et les ouvertures (14) qui communiquent avec le circuit de retour de liquide,
son volume mort (70) est nettement séparé de la chambre de décharge.

2. Régulateur de pression selon la revendication 1, **caractérisé en ce que** le corps de soupape (50) est reçu dans la cavité (15) de l'extrémité (11) du corps d'électrovanne (10), avec insertion d'une rondelle annulaire (60) dont le diamètre intérieur (D2) est en retrait et forme au moins une partie de la hauteur du volume mort annulaire (70).

3. Régulateur de pression selon la revendication 1, **caractérisé en ce que**
le corps de soupape (50) est plié dans la cavité (15).
